# EUROPÄISCHE PATENTSCHRIFT

(11) **EP 1 137 513 B1**
(45) Veröffentlichungstag und Bekanntmachung des Hinweises auf die Patenterteilung: **24.10.2007**
(21) Anmeldenummer: 00969186.6
(22) Anmeldetag: 18.08.2000
(51) Int. Cl.: B24B 23/02, B24B 23/03, B24B 55/10

(54) **HANDSCHLEIFMASCHINE MIT LAGER MIT DOPPELDICHTUNG**
PORTABLE GRINDER WITH DOUBLE-SEAL BEARING
MEULEUSE PORTATIVE COMPORTANT UN PALIER A DOUBLE ETANCHEITE

(30) Priorität: 01.09.1999 DE 19941620
(43) Veröffentlichungstag der Anmeldung: 04.10.2001
(73) Patentinhaber: ROBERT BOSCH GMBH, 70442 Stuttgart (DE)
(72) Erfinder: SIEDLER, Albrecht, 70567 Stuttgart (DE); WURST, Klaus, 70771 Leinfelden-Echterdingen (DE); JORDI, Beat, CH-4564 Obergerlafingen (CH)
(86) Internationale Anmeldenummer: PCT/DE2000/002819
(87) Internationale Veröffentlichungsnummer: WO 2001/015857

(56) Entgegenhaltungen:
- EP-A- 0 404 133
- EP-A- 0 753 679
- EP-A- 0 842 736
- EP-A- 0 894 990
- DE-A- 19 530 542
- DE-A- 19 800 046
- US-A- 5 560 715
- US-A- 5 816 711
- PATENT ABSTRACTS OF JAPAN vol. 1996, no. 11, 29. November 1996 (1996-11-29) & JP 08 182242 A (KOSOKU DENKI KK), 12. Juli 1996 (1996-07-12)

## Beschreibung

### Stand der Technik

Die Erfindung geht aus von einer Handwerkzeugmaschine, insbesondere von einer Handschleifmaschine nach dem Oberbegriff des Anspruchs 1, wie z.B. bekannt aus der Druckschrift DE-A-198 00 046.

Bekannt ist bei Exzenter- und Schwingschleifern zur Übertragung einer Rotation- bzw. zur Erzeugung einer Schwingbewegung von einer Antriebseinheit auf eine Schleifplatte zwei hintereinander liegende -gepaarte- Kugellager zu verwenden.

Dieses Kugellager wird, bedingt durch den konstruktiven Aufbau dieser Erzeugnisse, immer mit einem beim Arbeiten entstehenden Schleifabtrag umgeben. Dies kann durch eine mit Schleifgut vermischte vorbeiströmende Luft oder durch Verwirbelungen im Bereich des Kugellagers geschehen.

Bedingt durch rotierende Massen treten Momente auf, die einen Innen- und einen Außenring des Kugellagers gegeneinander verwinden, so daß eine Kugellagerdichtung zwischen dem Innen- und Außenring abhebt und ihre Funktion nicht mehr erfüllt. Durch einen sich dadurch bildenden Spalt kann Schleifgut ins Kugellagerinnere gelangen und Lagerschmierstoff kann austreten.

Das Eindringen von Schleifgut und/oder das Austreten von Lagerschmierstoff zwischen der Kugellagerdichtung und dem Kugellagerinnen- oder -außenring kann zu einer Zerstörung des Kugellagers und zu einem Ausfall des Exzenter- bzw. Schwingschleifers führen. Ein dadurch entstehender Schaden kann nur durch eine meist aufwendige Reparatur behoben werden.

Typischerweise soll durch eine zusätzliche Verwendung von Dichtscheiben, Schleuderscheiben und/oder Dichtringen verhindert werden, daß Schleifgut eindringen kann und sich mit dem Lagerschmierstoff vermischt, um so dem Ausfall vorzubeugen.

### Vorteile der Erfindung

Die Erfindung geht aus von einer Handwerkzeugmaschine entsprechend den Merkmalen des Oberbegriffs des Anspruchs 1.

Es wird entsprechend den Merkmalen des kennzeichnenden Teils des Anspruchs 1 vorgeschlagen, daß ein einem anfallenden Schleifstaub und/oder anfallenden Spänen nah benachbartes Lager zumindest auf einer Seite seines Lagerspalts mehrere, insbesondere zwei, nebeneinander angeordnete Dichtscheiben trägt.

Im Wälzlager, sind anstelle der heute üblichen einen Dichtscheibe vorzugsweise je Seite hintereinander im Dichtspalt zumindest zwei Dichtscheiben eingebaut. Durch die Dichtscheiben kann eine Art Labyrinthsystem erreicht und es kann sicher verhindert werden, daß Fremdstoffe in das Lager eindringen und/oder Schmierstoffe austreten. Die Positionierung der Dichtscheiben erfolgt innerhalb des Außenrings des Kugellagers. Durch die Dichtscheiben kann ein Dichtungssystem erreicht werden, das weit effektiver als nur eine Dichtscheibe oder die Kombination dieser mit einer zusätzlichen Dichtung wirkt. Ein ungewünschter Leckagespalt durch eine Verwindung des Außenrings und Innenrings des Kugellagers zueinander kann aufgrund der erreichbaren Labyrinthwirkung sicher vermieden werden. Eine Labyrinthwirkung und eine platzsparende Konstruktion wird insbesondere durch sich axial abstützende Dichtscheiben erreicht.

Um die Reibung zu minimieren, kann nach außen eine schleifende Dichtscheibe und folgend eine berührungslose Dichtscheibe verwendet werden. Mit einer berührungslosen Dichtscheibe im axial inneren Bereich kann ferner erreicht werden, daß zwischen die Dichtscheiben gelangtes Schmiermittel wieder zurückfließen kann. Grundsätzlich sind jedoch auch zwei oder mehrere schleifende Dichtscheiben oder zwei oder mehrere berührungslose bzw. nichtschleifende Dichtscheiben denkbar.

Das vorgeschlagene Dichtsystem benötigt keinen weiteren Bauraum außerhalb des Kugellagers, und eine zusätzliche Verspannung von Dichtungen außerhalb des Lagers und eine durch eine zusätzliche Dichtung verursachte Reibung können vermieden werden. Durch die Verwendung des Kugellagers mit integrierten ineinander liegenden Dichtscheiben wird nur ein Bauteil benötigt. Zusätzliche Dichtungen vor und nach dem Kugellager können vermieden, der Montageaufwand kann vereinfacht und zusätzliche Fehler durch Falschmontage können verhindert werden. Ferner ist das Dichtsystem besonders verschleißarm, da die Dichtscheiben durch die Innen- und Außenringe gekapselt und vor äußeren Einflüssen geschützt werden.

Um über den Lagerspalt vorteilhaft möglichst steife Dichtscheiben zu erreichen, besitzen diese zumindest teilweise eine konkave Kontur und/oder besitzen ein inneres Metallteil zur Versteifung, vorzugsweise ein verzinktes Blechteil.

Ferner wird vorgeschlagen, daß der Füllgrad des Lagers mit Schmiermittel zwischen 40% und 45% beträgt, wodurch ein großes Reservevolumen und eine hohe Lebensdauer erzielt werden können.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Schwingschleifer im Längsschnitt,
- Fig. 2: einen Exzenterschleifer im Längsschnitt,
- Fig. 3: einen Ausschnitt eines Winkelschleifers im Längsschnitt,
- Fig. 4: einen Ausschnitt eines Schwingschleifers gemäß Fig. 1 mit einem auf beiden Außenseiten mehrfach abgedichteten Exzenterlager,
- Fig. 5: einen Ausschnitt eines Exzenterschleifers gemäß Fig. 2 mit einem auf beiden Außenseiten mehrfach abgedichteten Exzenterlager gemäß Fig. 4,
- Fig. 6: ein als zweireihiges Schrägkugellager ausgestaltetes Exzenterlager und
- Fig. 7: einen vergrößerten Ausschnitt 7 aus Fig. 6.

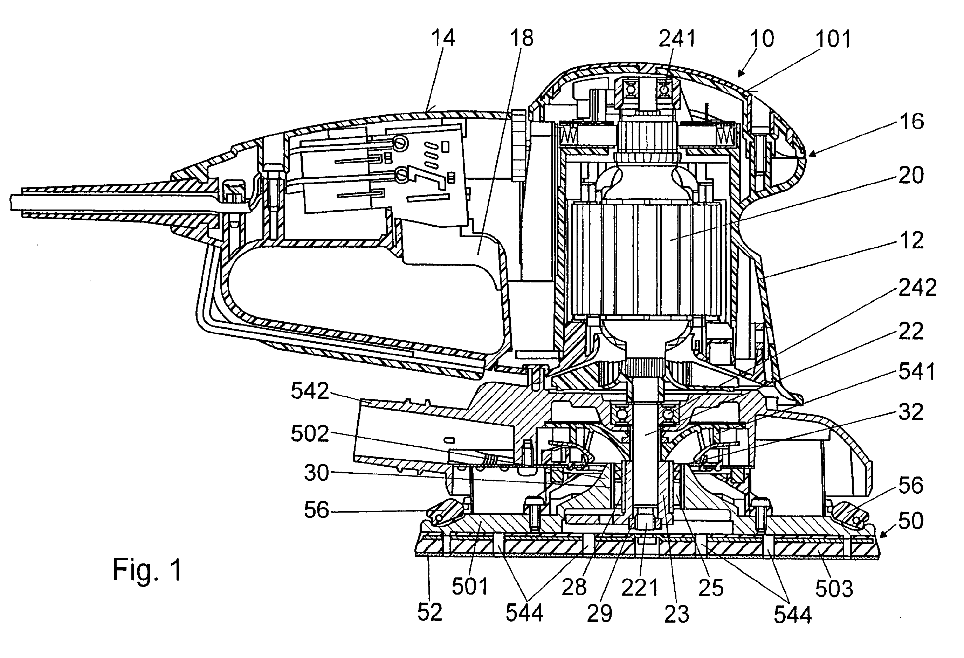

Die Figuren 1-3 bezichen sich auf aus dem Stand der Technik bekannte Handschleifmaschinen.

### Beschreibung der Ausführungsbeispiele

Figur 1 zeigt eine Handwerkzeugmaschine 10, die als herkömmlicher Schwingschleifer 101 ausgestaltet ist und ein Gehäuse 12 mit einem Handgriff 14 und einem Hilfshandgriff 16 aufweist. Der Handgriff 14 trägt eine Schalttaste 18, die die Stromzufuhr zu einem Motor 20 unterbricht bzw. einschaltet. Der Motor 20 hat eine Antriebswelle 22, die an ihrem oberen und unteren Ende in je einem Lager 241, 242 drehbar gelagert ist.

Außerdem hat die Antriebswelle 22 an ihrem unteren freien Ende einen Gewindeabschnitt 221, an dem mittels einer Mutter 29 eine Exzenterhülse 23 drehfest gehalten wird. Die Exzenterhülse 23 wird außen vom Innenring 28 eines Exzenterlagers 25 umgriffen, das mit seinem Außenring 30 drehfest im Lagerauge 502 eines Schleifkissenträgers 501 sitzt. Dieser trägt ein Schleifkissen 503 und bildet mit diesem einen Schleifteller 50.

Der Schleifteller 50 weist durchgehende Absauglöcher 544 auf, durch die - nach Passieren der kongruenten Absauglöcher eines an der Sohle des Schleiftellers 50 befestigten Schleifblatts 52 - beim Schleifen gebildeter Schleifstaub mittels eines sich mit der Antriebswelle 22 gemeinsam drehenden Ventilators 541 über einen Absaugkanal zum Absaugstutzen 542 gesaugt bzw. geblasen wird und von diesem in einen nicht dargestellten Staubauffangbehälter gelangt.

Das Schleifblatt 52 wird mittels eines Spannockens 56 am Schleifteller 50 festgehalten.

Bei Drehung der Antriebswelle 22 nach Betätigung der Schalttaste 18 wird dem Schleifteller 50 eine kreisende Bewegung ohne Eigendrehung erteilt, d. h. weil sich die Antriebswelle 22 gegenüber dem Schleifteller 50 frei drehen kann, wird diesem nur die Exzenterbewegung über die Exzenterhülse 23 erteilt.

Das herkömmliche Exzenterlager 25 ist auf seiner dem Ventilator 541 zugewandten Seite wegen der engen Nachbarschaft zum durchströmenden Schleifstaub mit gesonderten simmeringartigen Dichtmitteln 32 nach außen gegen den Eintritt von Schmutz und Staub geschützt. Dieser Schutz ist verbesserungsbedürftig.

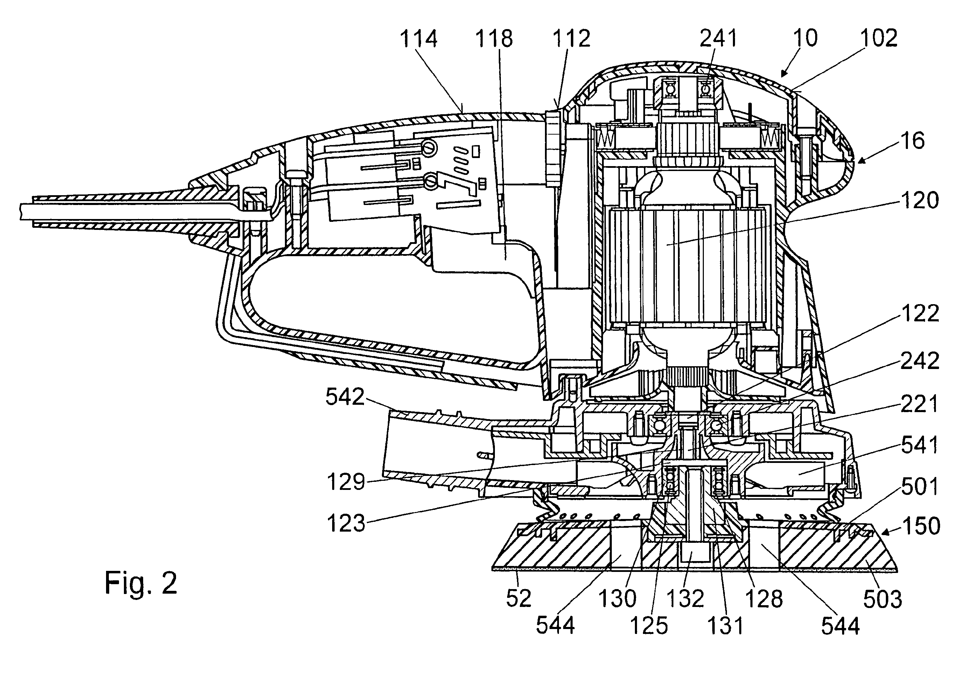

Figur 2 zeigt einen herkömmlichen Exzenterschleifer 102 mit einem Gehäuse 112 und einem Handgriff 114 und einem Hilfshandgriff 16. Im wesentlichen gleichbleibende Bauteile sind grundsätzlich mit den gleichen Bezugszeichen beziffert. Der Handgriff 114 trägt eine Schalttaste 118, die die Stromzufuhr zu einem Motor 120 unterbricht bzw. einschaltet. Der Motor 120 hat eine Antriebswelle 122, die an ihrem oberen und unteren Ende in je einem Lager 241, 242 drehbar gelagert ist.

Außerdem hat die Antriebswelle 122 an ihrem unteren freien Ende einen Gewindeabschnitt 221, mit dem sie an der oberen Stirnseite eines Ventilators 541 in dessen Innengewindeabschnitt 129 greift und diesen drehfest aufnimmt.

Der Ventilator 541 trägt auf seiner Unterseite eine Exzenterbohrung 123, in der drehfest der Außenring 130 eines herkömmlichen als zweireihiges Schrägkugellager ausgestaltetes Exzenterlager 125 sitzt. Dieses umgreift mit seinem Innenring 128 einen Exzenterzapfen 131, der dadurch drehbar gegenüber dem Ventilator 541 gelagert ist. Am freien Ende des Exzenterzapfens 131 ist mittels eines Schraubbolzens 132 drehfest ein runder Schleifteller 150 befestigt.

Der Schleifteller 150 weist mehrere durchgehende Absauglöcher 544 auf, durch die - nach Passieren der kongruenten Absauglöcher eines an der Sohle des Schleiftellers 150 befestigten Schleifblatts 52 - Schleifstaub, gefördert durch den sich mit der Antriebswelle 22 gemeinsam drehenden Ventilator 541, über einen Absaugkanal zum Absaugstutzen 542 gesaugt bzw. geblasen wird und von diesem in einen nicht dargestellten Staubauffangbehälter gelangt.

Das Schleifblatt 52 wird mittels Klettverschluß am Schleifteller 50 festgehalten.

Bei Drehung der Antriebswelle 22 nach Betätigung der Schalttaste 18 wird dem Schleifteller 50 eine kreisende Bewegung mit gleichzeitiger bzw. überlagerter Eigendrehung erteilt.

Das herkömmliche Exzenterlager 125 ist auf seiner dem Ventilator 541 zugewandten Seite nach außen zum Vermeiden des Kontakts mit Schleifstaub mit gesonderten simmeringartigen, nicht näher dargestellten Dichtmitteln gegen den Eintritt von Schmutz und Staub geschützt. Dieser Schutz ist verbesserungsbedürftig.

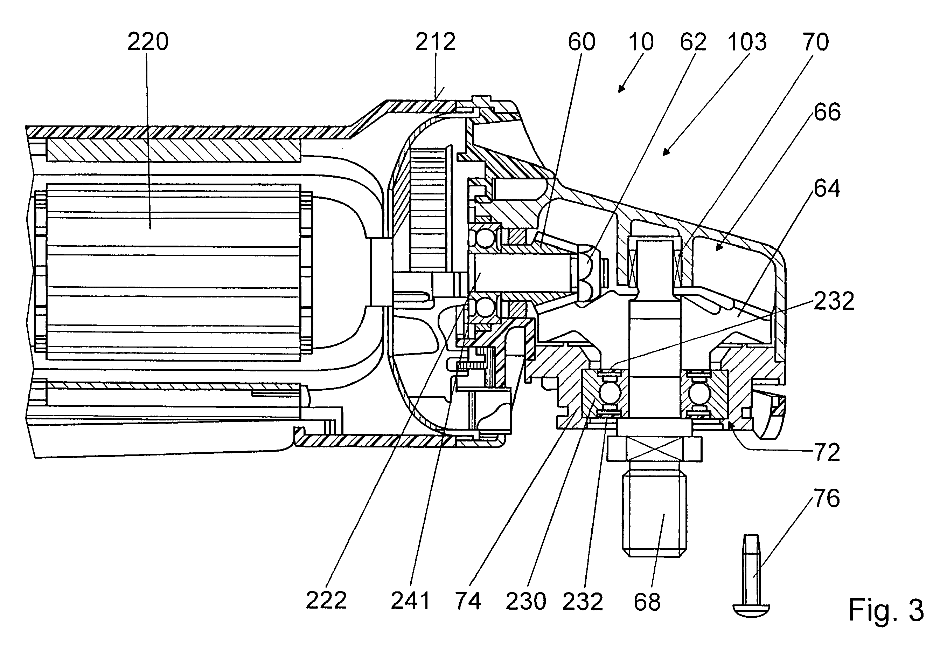

Figur 3 zeigt eine Handwerkzeugmaschine 10, die als herkömmlicher Winkelschleifer 103 ausgestaltet ist und ein längliches Gehäuse 212 aufweist, das als Handgriff dient. Es trägt eine nicht dargestellte Schalttaste, die die Stromzufuhr zu einem Motor 220 unterbricht bzw. einschaltet. Der Motor 220 hat eine Motorwelle 222, die beidenends in je einem Lager drehbar gelagert ist, von denen nur das vordere Lager 241 gezeigt ist.

Die Motorwelle 222 trägt am vorderen Ende ein kleines, mit einer Mutter 62 befestigtes Kegelritzel 60, das mit einem Tellerrad 64 kämmt und so ein Winkelgetriebe 66 bildet. Das Tellerrad 64 umgreift drehfest eine Arbeitsspindel 68, die oben in einem Nadellager 70 und unten in einem Flanschlager 72 gelagert ist. Dieses sitzt mit seinem Außenring 230 drehfest in einem Lagerflansch 74, der mit Schrauben 76 am Gehäuse 212 befestigbar ist.

Am freien Ende der Arbeitsspindel 68 ist eine Schleifscheibe befestigbar.

Nach Betätigung der Schalttaste dreht sich die Arbeitsspindel 68, und mit einer daran gespannten Schleifscheibe können Schleifarbeiten ausgeführt werden, bei denen sich üblicherweise in erheblichem Maß Staub entwickelt.

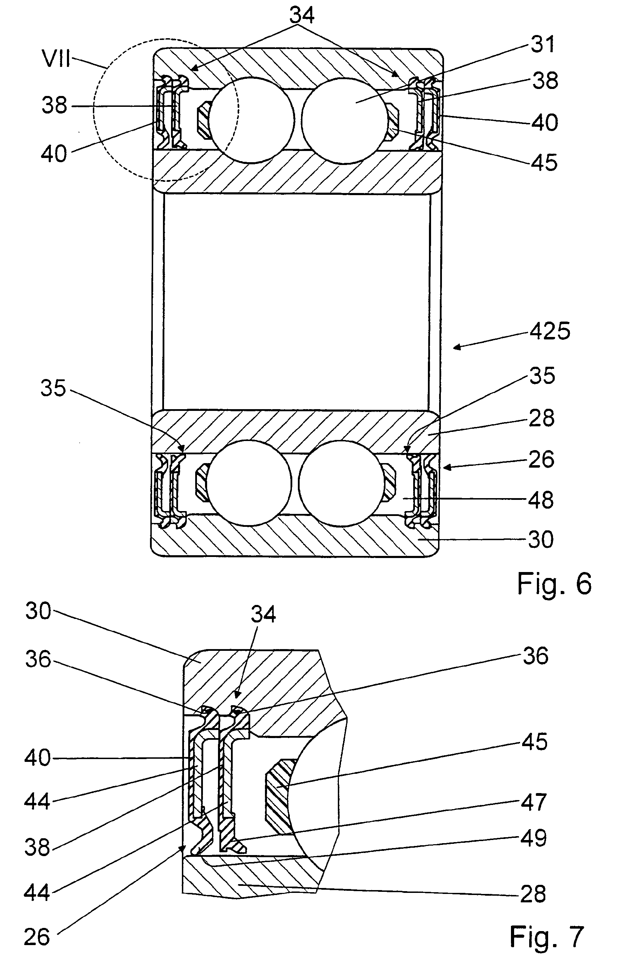

Das herkömmliche Flanschlager 72 ist auf seinen beiden Außenseiten zum Vermeiden des Kontakts mit Schleifstaub mit gesonderten deckelartigen Dichtmitteln 232 nach außen gegen den Eintritt von Schmutz und Staub geschützt. Dieser Schutz ist gegenüber den hohen Anforderungen und professioneller Beanspruchung beim Baustellenbetrieb verbesserungsbedürftig. Daher ist bei einem nicht dargestellten Winkelschleifer das Flanschlager auf beiden Seiten mit doppelter Anordnung von Dichtscheiben versehen, die gemäß Figur 6 bzw. 7 angeordnet sind.

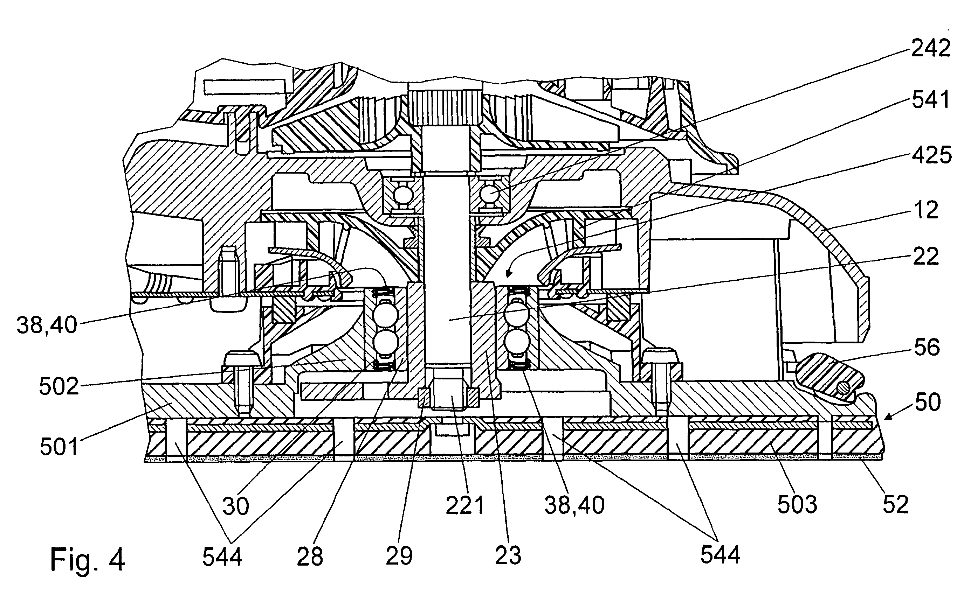

Figur 4 zeigt einen Ausschnitt des Schwingschleifers gemäß Figur 1 mit den zuvor genannten Einzelheiten, ohne diese zu wiederholen, wobei anstelle eines herkömmlichen Exzenterlagers ein auf beiden Außenseiten mehrfach abgedichtetes Exzenterlager 425 vorgesehen ist. Dadurch kann auf die gesonderten simmeringartigen Dichtmittel gemäß Figur 1 verzichtet werden. Das Exzenterlager 425 ist erheblich sicherer gegen Staubeintritt und Schmiermittelaustritt geschützt als das bisher gemäß Figur 1 verwendete Lager, und die Montage ist einfacher, weil keine gesonderten Dichtmittel montiert werden. Außerdem entfallen Beschaffung und Lagerhaltung für die gesonderten Dichtmittel.

Statt dessen trägt der drehfest im Lagerauge 502 des Schleifkissenträgers 501 sitzende Außenring 30 auf jeder Außenseite je zwei parallele Innenringnuten 36 (Fig. 6 und 7). Darin sind jeweils mit dem Außenrand 34 eine nichtschleifende und eine schleifende Dichtscheibe 38, 40 abgedichtet festgehalten. Der Innenrand 35 jeder Dichtscheibe 38, 40 umgreift mit seinem Fußbereich 47,49 den Innenring 28 des Exzenterlagers 425 entweder schleifend oder in einem geringen Spaltabstand und bildet eine Labyrinthdichtung bzw. bilden die Dichtscheiben 38, 40 ein Labyrinthsystem.

Die Dichtscheiben 38, 40 bestehen aus einem inneren Metallteil 44, das mit Kunststoff umspritzt ist (Fig. 6 und 7).

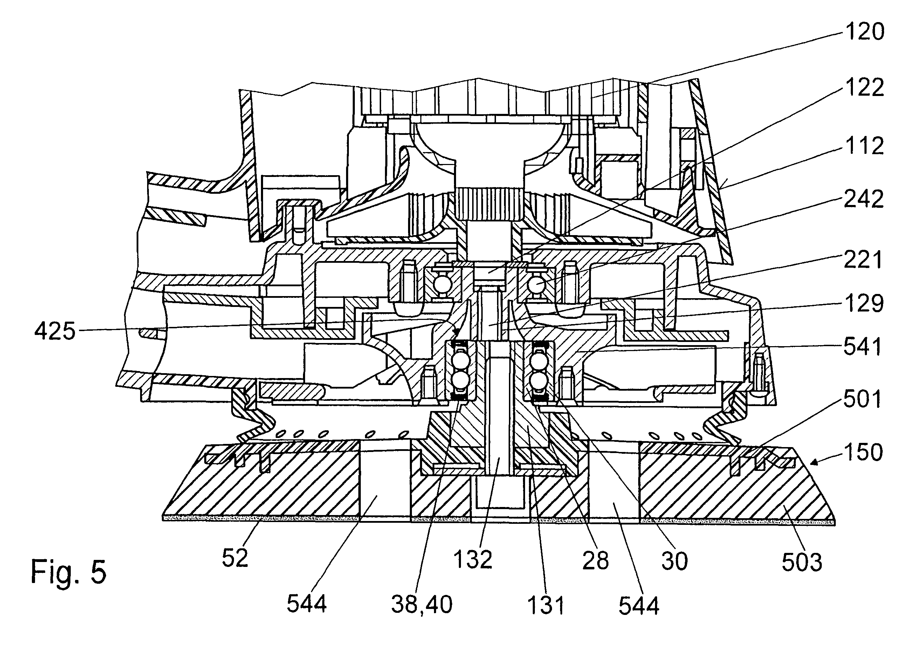

Figur 5 zeigt einen Ausschnitt des Exzenterschleifers gemäß Figur 2 mit den zuvor genannten Einzelheiten, ohne diese zu wiederholen, wobei anstelle eines herkömmlichen Exzenterlagers ein auf beiden Außenseiten mehrfach abgedichtetes Exzenterlager 425 - so wie gemäß Figur 4 - vorgesehen ist. Dadurch kann auf bisherige Dichtmittel gemäß Figur 2 verzichtet werden.

Das Exzenterlager 425 ist erheblich sicherer gegen Staubeintritt und Schmiermittelaustritt geschützt als das bisher gemäß Figur 2 verwendete Lager, und die Montage ist einfacher, weil keine gesonderten Dichtmittel montiert werden. Außerdem entfallen Beschaffung und Lagerhaltung für die gesonderten Dichtmittel.

Statt dessen trägt der drehfest im Ventilator 541 sitzende Außenring 30 auf jeder Außenseite je zwei parallele Innenringnuten 36 (Fig. 6 und 7). Darin sind jeweils mit dem Außenrand 34 eine nichtschleifende und eine schleifende Dichtscheibe 38, 40 abgedichtet festgehalten. Der Innenrand 35 jeder Dichtscheibe 38, 40 umgreift mit seinem Fußbereich 47, 49 den Innenring 28 des Exzenterlagers 425 lippenartig entweder schleifend oder in einem geringen Spaltabstand und bildet eine Labyrinthdichtung. Die Dichtscheiben 38, 40 bestehen aus einem inneren Metallteil 44, insbesondere verzinktem Stahl, das mit Kunststoff umspritzt ist.

Figur 6 zeigt das als zweireihiges Schrägkugellager ausgestaltete Exzenterlager 425 mit je zwei Dichtscheiben 38, 40, die den Lagerspalt 26 auf beiden Seiten außen schleifend und innen nichtschleifend abdichten in vergrößerter Darstellung.

Der Innen- und Außenring 28, 30 ist jeweils breiter als bei herkömmlichen Schrägkugellagern und kann dadurch die doppelte Anordnung der Dichtringe wirksam tragen. Die zwei Reihen von Kugeln 31 werden durch einen Lagerkäfig 45 gefaßt bzw. geführt.

Die Dichtscheiben 38, 40 bilden den Kugeln 31 zugewandt ein tellerartiges Hohlprofil und gegenüber dem Innenring 28 mit ihren Fußbereichen 47, 49 eine schleifende Dichtung bzw. eine engspaltige Labyrinthdichtung.

Das Exzenterlager 425 ist mit Schmiermittel 48 gefüllt mit einem Füllungsgrad von 35% bis 50% gegenüber dem Füllungsgrad bei herkömmlichen Lagern von 35% mit je 5% Minus- bzw. Plus-Toleranz.

Figur 7 verdeutlicht die Ausgestaltung des Außenrings 30 des Lagers 425 mit zwei eng benachbarten Innenringnuten 36, die so angeordnet sind, daß die Dichtscheiben 38, 40 axial aneinanderliegen.

Außerdem ist die Ausgestaltung der Fußbereiche 47, 49 der Dichtscheiben 38, 40 deutlich sichtbar.

Neben den beschriebenen Ausführungsbeispielen ist die erfindungsgemäße Lösung ferner bei anderen, dem Fachmann als sinnvoll erscheinenden Handwerkzeugmaschinen einsetzbar.

### Bezugszeichen

- 10: Handwerkzeugmaschine
- 12: Gehäuse
- 14: Handgriff
- 16: Hilfshandgriff
- 18: Schalttaste
- 20: Motor
- 22: Antriebswelle
- 23: Exzenterhülse
- 25: Exzenterlager
- 26: Lagerspalt v. 25, 125, 425
- 28: Innenring v. 25, 125, 425
- 29: Mutter
- 30: Außenring v. 25, 125, 425
- 31: Kugeln
- 32: Dichtmittel
- 34: Außenrand
- 35: Innenrand
- 36: zwei parallele Radialnuten
- 38: nichtschleifende Dichtscheibe
- 40: schleifende Dichtscheibe
- 44: inneres Metallteil
- 45: Lagerkäfig
- 47: Fußbereich
- 48: Schmiermittel
- 49: Fußbereich
- 50: Werkzeug, Schleifteller
- 52: Schleifmittel
- 56: Spannocken
- 60: Kegelritzel
- 62: Mutter
- 64: Tellerrad
- 66: Winkelgetriebe
- 68: Arbeitsspindel
- 70: Nadellager
- 72: Flanschlager
- 74: Lagerflansch
- 76: Schraube
- 101: Schwingschleifer
- 102: Exzenterschleifer
- 103: Winkelschleifer
- 112: Gehäuse
- 114: Handgriff
- 118: Schalttaste
- 120: Motor
- 122: Antriebswelle
- 123: Exzenterbohrung
- 125: Exzenterlager
- 128: Innenring
- 129: Innengewindeabschnitt
- 130: Außenring
- 131: Exzenterzapfen
- 132: Schraubbolzen
- 150: Schleifteller
- 212: Gehäuse
- 220: Motor
- 221: Gewindeabschnitt
- 222: Antriebswelle
- 230: Außenring
- 232: Dichtmittel
- 241: Lager
- 242: Lager
- 425: Exzenterlager
- 501: Schleifkissenträger
- 502: Lagerauge v. 501 für 25, 125, 425
- 503: Schleifkissen
- 541: Ventilator
- 542: Absaugstutzen
- 544: Absauglöcher

## Patentansprüche

1. Handwerkzeugmaschine (10), insbesondere Handschleifmaschine mit einem Gehäuse (12, 112) und einem darin gelagerten Motor (120) mit einer drehbaren Antriebswelle (22, 122), die an einem Ende wirkungsmäßig mit einem Werkzeug (50, 150) verbunden ist, insbesondere einen mit Schleifmittel (52) bestückbaren Schleifteller trägt, gegenüber dem die Antriebswelle (22, 122) mittels eines Wälzlagers (425) mit durch einen Lagerspalt (26) beabstandeten Innen-(28) und Außenring (30), mit drehfest und drehbar anzuordnenden Teilen drehbar gelagert ist, **dadurch gekennzeichnet, daß** das einem anfallenden Schleifstaub und/oder anfallenden Spänen nah benachbartes Wälzlager (425) zumindest auf einer Seite seines Lagerspalts (26) mehrere, insbesondere zwei, nebeneinander angeordnete Dichtscheiben (38, 40) trägt, wobei die zwei Dichtscheiben (38, 40) drehfest am Wälzlager (425) angeordnet sind, wobei sie mit ihrem Außenrand (34) an dessen gehäusefest angeordneten Außenring (30) einrastbar an dessen zwei parallelen Innenringnuten (36), sitzen und wobei sich die zwei Dichtscheiben (38, 40) mit ihrem Außenrand (34) in ihrer Montageposition an den zwei parallelen Innenringnuten (36) axial berühren und ihr übriger axialer Abstand voneinander bedingt ist durch ihr den Kugeln (31) zugewandtes konkaves Profil.

2. Handwerkzeugmaschine (10) nach Anspruch 1, **dadurch gekennzeichnet, daß** das dem Werkzeug (50, 150) nächste Lager (425) auf beiden Seiten des Lagerspalts (26) zwei nebeneinander angeordnete Dichtscheiben (38, 40) trägt.

3. Handwerkzeugmaschine (10) nach einem der Ansprüche 1 bis 2, **dadurch gekennzeichnet, daß** das Lager (425) ein zweireihiges Schrägkugellager ist.

4. Handwerkzeugmaschine (10) nach einem der Ansprüche 1 bis 3, **dadurch gekennzeichnet, daß** eine der zwei auf einer Seite angeordneten Dichtscheiben (38, 40) eine gegenüber dem Innenring (28) des Lagers (425) nichtschleifende und die andere eine schleifende Dichtscheibe ist.

5. Handwerkzeugmaschine (10) nach Anspruch 4, **dadurch gekennzeichnet, daß** die schleifende Dichtscheibe (40) am Lager (425) außen und die nichtschleifende (38) innen, den Wälzkörpern (31) zugewandt, angeordnet ist.

6. Handwerkzeugmaschine (10) nach einem der Ansprüche 1 bis 2, **dadurch gekennzeichnet, daß** die Dichtscheiben (38, 40) aus Kunststoff, insbesondere aus RSR oder RSL oder RST oder RSF oder Viton, insbesondere im Verbund mit einem inneren Metallteil (44), insbesondere aus verzinktem Stahl, bestehen.

7. Handwerkzeugmaschine (10) nach einem der Ansprüche 1 bis 2, **dadurch gekennzeichnet, daß** der Innenring (28) und der Außenring (30) je etwa 4 mm breiter als der eines gleichartigen Rillenkugellagers ohne Dichtscheiben (38, 40) sind.

8. Handwerkzeugmaschine (10) nach einem der vorhergehenden Ansprüche, **dadurch gekennzeichnet, daß** der Füllungsgrad des Lagers (425) mit Schmiermittel zwischen 40% und 45% beträgt.

## Claims

1. Portable power tool (10), in particular a portable sander, comprising a housing (12, 112) and a motor (120) which is mounted therein and has a rotatable drive shaft (22, 122) which is operatively connected to a tool (50, 150) at one end, in particular carries a sanding plate which can be fitted with an abrasive (52) and relative to which the drive shaft (22, 122) is rotatably mounted by means of a rolling bearing (425), having an inner race (28) and an outer race (30) spaced apart by a bearing gap (26), with parts which are to be arranged in a rotationally fixed and rotatable manner, **characterized in that** the rolling bearing (425) closely adjacent to accumulating sanding dust and/or accumulating chips carries, at least on one side of its bearing gap (26), a plurality of sealing discs (38, 40), in particular two sealing discs (38, 40), arranged next to one another, wherein the two sealing discs (38, 40) are arranged on the rolling bearing (425) in a rotationally fixed manner, wherein they sit with their outer margin (34) on its outer race (30), arranged fixedly in relation to the housing, in such a way that they can latch in position at the two parallel inner annular grooves (36) of said outer race (30), and wherein the two sealing discs (38, 40) axially touch one another with their outer margin (34) in their fitted position at the two parallel inner annular grooves (36) and their remaining axial distance apart is brought about by their concave profile which faces the balls (31).

2. Portable power tool (10) according to Claim 1, **characterized in that** the bearing (425) next to the tool (50, 150) carries two sealing discs (38, 40), arranged next to one another, on both sides of the bearing gap (26).

3. Portable power tool (10) according to either of Claims 1 and 2, **characterized in that** the bearing (425) is a double-row angular contact ball bearing.

4. Portable power tool (10) according to one of Claims 1 to 3, **characterized in that** one of the two sealing discs (38, 40) arranged on one side is a non-rubbing sealing disc relative to the inner race (28) of the bearing (425) and the other is a rubbing sealing disc relative to the inner race (28) of the bearing (425).

5. Portable power tool (10) according to Claim 4, **characterized in that** the rubbing sealing disc (40) on the bearing (425) is arranged on the outside and the non-rubbing sealing disc (38) is arranged on the inside facing the rolling elements (31).

6. Portable power tool (10) according to either of Claims 1 and 2, **characterized in that** the sealing discs (38, 40) are made of plastic, in particular of RSR or RSL or RST or RSF or Viton, in particular in combination with an inner metal part (44), in particular made of galvanized steel.

7. Portable power tool (10) according to either of Claims 1 and 2, **characterized in that** the inner race (28) and the outer race (30) are each about 4 mm wider than a deep groove ball bearing of the same kind without sealing discs (38, 40).

8. Portable power tool (10) according to one of the preceding claims, **characterized in that** the degree of filling of the bearing (425) with lubricant is between 40% and 45%.

## Revendications

1. Machine outil portative (1, 10) notamment ponceuse à main comportant un boîtier (12, 112) logeant un moteur (120) avec un arbre d'entrainement (22, 122) entraîné en rotation, dont une extrémité coopère avec un outil (50, 150) notamment avec un plateau de ponçage garni d'un moyen de ponçage (52), par rapport auquel l'arbre moteur (22, 122) est monté à rotation par l'intermédiaire d'un palier de roulement (425) ayant une bague intérieure (28) et une bague extérieure (30) écartées d'un intervalle de palier (26), montée en rotation avec des pièces solidaires en rotation et des pièces libres en rotation,
**caractérisée en ce que**
le palier de roulement (425) situé à proximité et exposé à la poussière et/ou aux copeaux de ponçage, comporte au moins d'un côté de son intervalle de palier (26), plusieurs, et notamment deux, rondelles d'étanchéité (38, 40) juxtaposées, et
les deux rondelles d'étanchéité (38, 40) sont solidaires en rotation du palier de roulement (425) et
ces rondelles sont accrochées par leur bord extérieur (34) à la bague extérieure (30) solidaire du boîtier, dans deux rainures annulaires parallèles (36) et
les deux rondelles d'étanchéité (38, 40) se touchent axialement par leur bord extérieur (34) en position de montage contre deux rainures annulaires intérieures parallèles (36), et
leur autre distance axiale les écarte par leur profil concave tourné vers les billes (1).

2. Machine outil portative (10) selon la revendication 1,
**caractérisée en ce que**
le palier (425) le plus proche de l'outil (50, 150) porte sur les deux côtés de l'intervalle de palier (26), deux rondelles d'étanchéité (38, 40) juxtaposées.

3. Machine outil portative (10) selon l'une des revendications 1 et 2,
**caractérisée en ce que**
le palier (425) est un palier incliné, à billes, à deux rangées.

4. Machine outil portative (10) selon l'une des revendications 1 à 3,
**caractérisée en ce que**
l'une des rondelles d'étanchéité (38, 40) prévues d'un côté est une rondelle d'étanchéité qui ne frotte pas contre la bague intérieure du palier (425) et l'autre est une rondelle d'étanchéité qui frotte.

5. Machine outil portative (10) selon la revendication 4,
**caractérisée en ce que**
la rondelle d'étanchéité (40) qui frotte, est tournée vers l'extérieur du palier (425) et la rondelle (38) qui ne frotte pas, est tournée vers l'intérieur, vers les organes de roulement (31).

6. Machine outil portative (10) selon l'une des revendications 1 et 2,
**caractérisée en ce que**
les rondelles d'étanchéité (38, 40) sont en une matière plastique, notamment en RSR ou RSL ou RST ou RSF ou Viton, notamment en combinaison avec une pièce métallique intérieure (44), notamment de l'acier galvanisé.

7. Machine outil portative (10) selon l'une des revendications 1 et 2,
**caractérisée en ce que**
la bague intérieure (28) et la bague extérieure (30) sont plus larges d'environ 4 mm que le palier à billes et à gorge de même type sans rondelles d'étanchéité (38, 40).

8. Machine outil portative (10) selon l'une des revendications précédentes,
**caractérisée en ce que**
le degré de remplissage du palier (425) avec de l'agent de graissage est compris entre 40 et 45%.
